(19) Europäisches Patentamt
European Patent Office
Office européen des brevets

(11) EP 0 345 648 B2

(12) NEUE EUROPÄISCHE PATENTSCHRIFT

(45) Veröffentlichungstag und Bekanntmachung des Hinweises auf die Entscheidung über den Einspruch:
**05.04.2000 Patentblatt 2000/14**

(45) Hinweis auf die Patenterteilung:
**06.09.1995 Patentblatt 1995/36**

(21) Anmeldenummer: **89109958.2**

(22) Anmeldetag: **01.06.1989**

(51) Int. Cl.7: **C08G 69/16**, C08G 69/48

# (54) Thermoplastisch verarbeitbare Polyamide

Thermoplastically processable polyamides

Polyamides thermoplastiques façonnables

(84) Benannte Vertragsstaaten:
**CH DE ES FR GB IT LI**

(30) Priorität: **07.06.1988 DE 3819427**

(43) Veröffentlichungstag der Anmeldung:
**13.12.1989 Patentblatt 1989/50**

(73) Patentinhaber: **EMS-INVENTA AG**
**8001 Zürich (CH)**

(72) Erfinder:
- **Schmid, Eduard, Dr. sc. nat.**
  **CH-7402 Bonaduz (CH)**
- **Decurtins, Silvio, Dr. phil. nat.**
  **CH-7235 Fideris (CH)**

(74) Vertreter: **Becker Kurig Straus**
**Patentanwälte**
**Bavariastrasse 7**
**80336 München (DE)**

(56) Entgegenhaltungen:

| | |
|---|---|
| **EP-A- 0 149 986** | **DE-A- 1 942 452** |
| **DE-A- 2 233 768** | **DE-A- 2 406 491** |
| **JP-A- 502 791** | **JP-A- 504 297** |

- **R. Vieweg, A. Müller, Kunststoffhandbuch, Bd. VI, Carl Hanser Verlag 1966, S. 19-21**

Bemerkungen:
Die Akte enthält technische Angaben, die nach dem Eingang der Anmeldung eingereicht wurden und die nicht in dieser Patentschrift enthalten sind.



Printed by Xerox (UK) Business Services
2.16.7 (HRS)/3.6

## Beschreibung

Es ist bekannt, gezielt Polymersysteme, insbesondere Polyolefinsysteme, mit verzweigtkettigen Strukturen herzustellen. Über die Wahl der Monomeren und die Polymerisationstechnik sind dabei die unterschiedlichsten Kettenstrukturen erreichbar. Die Art der Kettenverzweigung beeinflußt dabei die Rheologie der Polymerschmelze und die Eigenschaften der daraus hergestellten Fertigprodukte. beispielsweise das Schmelz- und Löslichkeitsverhalten sowie die mechanischen Eigenschaften, wie beispielsweise die Steifigkeit, die Zähigkeit und das Spannungsdehnungsverhalten.

In der GB-PS 750 629 wird die Herstellung von Polyamiden aus Dicarbonsäuren und Diaminen als Hauptkomponenten. insbesondere PA-66 beschrieben, welche Trimesinsäure in einer Menge von 0,3 bis 3,8 Mol-% einkondensiert mit einer äuqivalenten Menge an Diamin enthalten.

Die GB-PS 749 479 beschreibt die Herstellung von Polyamiden aus Diaminen und Dicarbonsäuren als Hauptkomponenten. insbesondere PA-66, welche Bishexamethylen-triamin in Kombination mit einer Dicarbonsäure. bevorzugt in einer äuivalenten Menge, enthalten. Die Aufgabe dieser Leiden bekannten Verfahren besteht darin, die Schmelzviskosität der Polyamide zu erhöhen.

Es hat sich jedoch herausgestellt, daß diese Verfahren für die Praxis ungeeignet sind, da immer gleichzeitig vernetzte Anteile entstehen, die sich am Reaktionsgefäß ablagern und bei der Verarbeitung der Schmelze, etwa zu Folien, zu einer stark erhöhten Bildung von Inhomogenitäten ("Stippenbildung") führen.

Die US-PS 1 263 952 beschreibt Polyamidmassen mit definierten Gewichtsanteilen an mono- und trifunktionellen Verbindungen. Als Monomeres wird in den Beispielen ausschließlich das 6,6-Salz erwähnt.

Das Gleiche gilt im wesentlichen für die BE-PS 641 630, gemäß welcher die monofunktionellen Bausteine zur Verbesserung der Anfärbbarkeit mit Säurefarbstoffen zusätzlich sekundäre Aminogruppen enthalten.

Über gezielt verzweigte thermoplastisch verarbeitbare Polyamide ist bisher wenig bekannt. Im "Kunststoffhandbuch", Band VI, Polyamide (C. Hanser Verlag München 1966, Seite 15) wird im Hinblick auf A-B-Polyamide (PA-6, PA-11 und PA-12) ausgeführt, daß eine polyfunktionelle Verbindung, die nur eine Art Endgruppen enthält, beispielsweise B, naturgemäß nur ein verzweigtes Makromolekül liefern kann. Modellüberlegungen dazu zeigen, daß entsprechende Makromoleküle definiert eine Verzweigungsstelle besitzen.

In der DE-OS 2 732 329 werden Polycaprolactam und Copolymere mitenthaltend Salze aus Diaminen und Dicarbonsäuren, beispielsweise aus Hexamethylendiamin und Terephthalsäure (Beispiel 2) sowie Triaminen der Struktur $H_2N$-R-NH-R-$NH_2$ in der Monomermischung beschrieben. Die Beispiele zeigen, daß jeweils äquimolare Mengen an Triamin und zusätzlicher Carbonsäure verwendet werden (Beispiele 1b und 2C). In der Praxis hat es sich jedoch gezeigt, daß Formulierungen, welche eine Monomermischung aus Salzen aus Diaminen und Dicarbonsäuren mitenthalten (Beispiel 1b), zur Bildung vernetzter Strukturen neigen, was sich durch die Bildung von Gelteilchen und Ablagerungen am Reaktionsgefäß zu erkennen gibt. Durch Mitverwendung von monomeren Kettenlängenreglern wird die Bildung von vernetzten Polymeranteilen zwar herabgesetzt, dennoch treten diese in störenden Mengen auf. Dies zeigt sich insbesonders dann, wenn mehrere Polymerisationsansätze hintereinander in demselben Kondensationsgefäß polymerisiert werden, das heißt bei einer industriellen Serien-Batchproduktion. Die entstehenden vernetzten Polymeranteile lagern sich zunächst an der Wand des Kondensationsgefäß ab und das ausgetragene Polymere wird von Charge zu Charge inhomogener (stippiger). Im gleichen Ausmaß nehmen Verarbeitbarkeit und Qualität ab.

DE-OS 24 06 491 betrifft Bikomponentenfasern aus im wesentlichen Polycaprolactam. Zur Erzielung des gewünschten Kräuselverhaltens wird reines PA-6 mit PA-6 Copolyamid, welches als Cokomponente ca. 10 bis 20 Gew.-% des Salzes aus dimerisierter Fettsäure und Diaminohexan enthält, versponnen. Der erwähnte geringe Molanteil an trimerisierter Fettsäure ist eine immer entstehende Verunreinigung bei der Herstellung der dimerisierten Fettsäure und hat nichts zu tun mit dem Kräuselverhalten. Er kann jedoch die Polymerqualität durch Bildung von Gelteilchen beeinträchtigen.

In der DE-OS 37 14 607 werden Lactampolyamide beschrieben, bei deren Herstellung 0,2 bis 2. bevorzugt 0.3 bis 1,0 Gew.-%. $\alpha$-Amino- $\varepsilon$-Caprolactam in Kombination mit einer etwa äquivalenten Menge an Dicarbonsäure als Polymerisationsbeschleuniger mitverwendet wird. Dieser spezielle Polyamidbaustein enthält die Funktionalitäten -COOH und -$NH_2$ im Äquivalentverhältnis 1 : 2. Die für eine vollständige Kondensation aller Endgruppen fehlenden -COOH-Gruppen werden bewußt zugefügt. Damit können vernetzte Polymeranteile mitentstehen. Deshalb ist auch der Anteil dieses Polymerzusatzes auf den sehr tiefen Wert von unter 2, bevorzugt 0,3 bis 1, Gew.-%, zu begrenzen.

DE-OS-2233768 beschreibt die Herstellung von basisch modifizierten Polyamiden, wobei den Monomergemischen ein Polyamin, daß zwingend sekundäre NH-Gruppen in der Polymerkette enthält, in Kombination mit Di- und Monocarbonsäuren zugesetzt wird. Diese basisch modifizierten Polyamide finden Verwendung als Substrat für Reaktivfarbstoffe.

JP-A-50/2791 sowie JP-A-50/4297 beschreiben spezielle Verfahrensschritte bzw. Rezepturanpassungen zur Bereitstellung von hochviskosen Polycaproamiden. Dazu wird zunächst der Monomermischung Trimesinsäure und Diamin zugefügt, wobei das Molverhältnis von Trimesinsäure zu Diamin in einem weiten Bereich variiert werden kann.

Gemäß den Beispielen von JP-A-50/2791 und JP-A-50/4297 wird aber stets mit dem stöchometrischen Verhältnis so gearbeitet, daß sämtliche Carboxylgruppen durch eine Aminogruppe neutralisiert sind. Da aber bei den beschriebenen Verfahren ohne spezielle Maßnahmen unlösliche Anteile und Gelbildung auftreten können, sind spezielle zusätzliche Maßnahmen notwendig. Gemäß JP-A-50/2791 werden daher zwingend mindestens 3 Gew.-% Aminocapronsäure zugefügt. Gemäß JP-A-50/4297 muß in einem speziellen, zusätzlichen Verfahrensschritt eine Wärmevorbehandlung der Schmelze durchgeführt werden, die in einem definierten Temperaturbereich zu erfolgen hat und ein definierter Wasseranteil mit anwesend sein muß. Beide Maßnahmen sind durch spezielle eingrenzende Formeln vorgegeben.

Insgesamt zeigt sich damit, daß

A bei Zusatz einer mindestens trifunktionellen Verbindung zu Polyamiden aus Salzen (Diamin + Dicarbonsäure) beziehungsweise zu Polyamiden, die Monomere entsprechend Salzpaare mitenthalten oder

B bei Zusatz einer mindestens trifunktionellen Verbindung (Amin oder Carbonsäure), die in einem annähernd äquivalenten Verhältnis die zu ihr kondensationsaktive, mindestens bifuktionell wirkende Verbindung (Carbonsäure oder Amin) mitenthält, sowie insbesondere

C bei Kombination der Maßnahmen entsprechend A und B es nicht möglich ist, thermoplastisch verarbeitbare Polyamide guter Qualität reproduzierbar, d.h. in mehreren Ansätzen hintereinander, herzustellen.

Der Erfindung lag damit die Aufgabe zugrunde, hochmolekulare, verzweigtkettige Polyamide guter Qualität, die in vielen einander folgenden Chargen reproduzierbar hergestellt werden können und die zu mindestens 50 Gew.-% Polymerketten mit mehr als einer Verzweigung besitzen, herzustellen.

Überraschenderweise wurde nun gefunden, daß thermoplastische Polyamide gemäß Patentanspruch 1 die geschilderten Nachteile des Standes der Technik nicht mehr besitzen.

Die Erfindung betrifft demgemäß thermoplastisch verarbeitbare, durch hydrolytische Polymerisation erhältliche Polyamide aus Aminosäuren und oder Lactamen als Grundbausteine, wobei mindestens 50 ; Gew-% der Polymermoleküle mehr als eine Kettenverzweigung besitzen, welche dadurch erhalten werden daß der Schmelze der Grundmonomeren verzweigend wirkende Komponenten in folgender Zusammensetzung zugesetzt werden:

a) 5 bis 150 µMol/g Polymeres eines mindestens trifunktionellen, aus einem Amin oder einer Carbonsäure bestehenden Monomeren, wobei die Aminogruppen primär sind sowie

b) 2 bis 100 µMol/g Polymeres eines mindestens bifunktionellen, aus einer Carbonsäure oder einem Amin bestehenden Monomeren, mit der Maßgabe, daß dann, wenn a) ein Amin ist, b) eine Carbonsäure sein muß, sowie dann, wenn a) eine Carbonsäure ist, b) ein Amin sein muß, sowie gegebenenfalls

c) 5 bis 450 µMol/g Polymeres eines bei einer üblichen Polykondensation monofunktionell wirkenden Monomeren, wobei ein Molverhältnis der Komponente a) zu der Komponente b) von mindestens 1 eingehalten wird. wenn die Komponente a) trifunktionell und die Komponente b) bifunktionell ist, und von mindestens 2 eingehalten wird, wenn die Komponente a) und die Komponente b) trifunktionell sind, und mit der Maßgabe, daß bei Verwendung von ε-Caprolactam als Grundmonomer, Trimesinsäure und bifunktionellen Amin, ω-Aminocapronsäure in einer Menge von 0 Gew.-% bis weniger als 3 Gew.-%, bezogen auf ε-Caprolactam, zugesetzt wird und daß die hydrolytische Polymerisation ohne getrennte Verfahrensstufe entsprechend Zusatz von 2 bis 25 Gew.-% Wasser bei 70 bis 210°C durchgeführt wird.

Ein wesentliches Merkmal dieser Erfindung ist, daß als Grundmonomere ausschließlich Aminosäuren und Lactame verwendet werden dürfen.

Ein weiteres erfindungsrelevantes Merkmal ist, daß die zusätzlichen Kettenbausteine die Struktur der Polymerketten, d.h. ihren Verzweigungsgrad, ihre mittlere Molmasse bzw. die Art ihrer Kettenenden wesentlich mitbestimmen und damit in einem definierten, erfindungsrelevanten Molverhältnis zueinander verwendet werden müssen.

Gemäß einer weiteren bevorzugten erfindungsgemäßen Ausführungsform sind die Polyamide in der Weise erhältlich, daß monofunktionelle Verbindungen mit einer Funktionalität entsprechend der Komponenten a) in einem Molanteil, der nicht übersteigt, mitverwendet werden.

Vorzugsweise werden die erfindungsgemäßen Polyamide ferner in der Weise erhalten, daß monofunktionelle Verbindungen c) mit den Endgruppen entsprechend b) in einem maximalen Molanteil, der sich gemäß der folgenden Formel berechnet, eingesetzt werden

$$c) = m_{a)} f_{a)} - m_{b)} f_{b)} + 100,$$

wobei $m_{a)}$ und $m_{b)}$ die Molanteile der Verbindungen a) und b) (in µMol/g Polymeres ausgedrückt) und $f_{a)}$ sowie $f_{b)}$ die Funktionalitäten der Verbindungen bedeuten.

Nach einer weiteren bevorzugten Ausführungsform der Erfindung werden die Polyamide in der Weise erhalten, daß monomere Verbindungen entsprechend a) und b) eingesetzt werden und dabei die Bedingungen gemäß der Ansprüche 4 und 5 jeweils für die entsprechenden monofunktionellen Verbindungen c) eingehalten werden.

Eine genaue Analyse des gestellten Problems hat gezeigt, warum die verzweigten Polyamide gemäß dem Stand der Technik immer zu Gelbildung und Vernetzung neigen und weshalb die erfindungsgemaßen Polyamide diese Erscheinung nicht zeigen. Wird nämlich zu einer Schmelze aus reiner Aminosäure (und oder Lactam) eine polyfunktionelle, beispielsweise trifunktinelle, Verbindung mit nur einer Art von Endgruppen (beispielesweise -COOH) gegeben, so wächst in definiert 3 Richtungen ein Polymermolekül, das an seinem Kettenende immer die -COOH-Gruppe trägt Da -COOH-Gruppen unter üblichen Kondensationbedingungen nicht miteinander reagieren, kann keine Vernetzung eintreten. Man kann nun gezielt untersuchen, wie die entstehende Kettenstruktur sich ändert, wenn der Schmelze Diamin in unterschiedlichem Molanteil zur Tricarbonsäure zugefügt wird.

Die folgenden Strukturbeispiele grenzen dabei klar die erfindungemäßen Polyamide vom Stand der Technik ab. Dabei entspricht die Anzahl der gezeichneten Komponenten direkt ihrem Molverhältnis. Die eigentlichen Kettenglieder stammen natürlich von den Aminosäuren, die zwischen diese speziellen Bausteine eingeschoben sind, jedoch dabei die Endgruppenverhältnisse nie ändern. Es bedeuten:

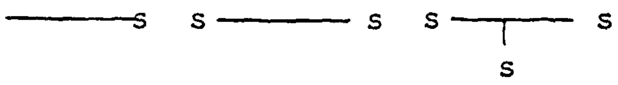

mono-, bi- und tri-
funktionelle Säure

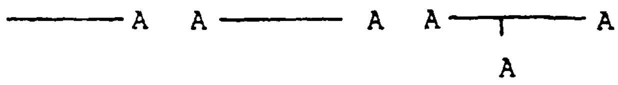

mono-, bi- und tri-
funktionelles Amin.

1.

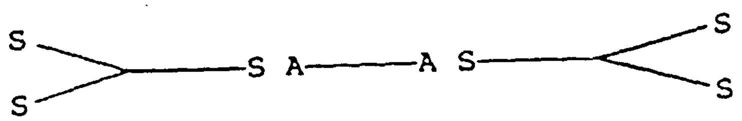

(X)

Im statistischen Mittel entstehen Ketten mit zwei Verzweigungen, Vernetzung tritt nicht ein.

2.

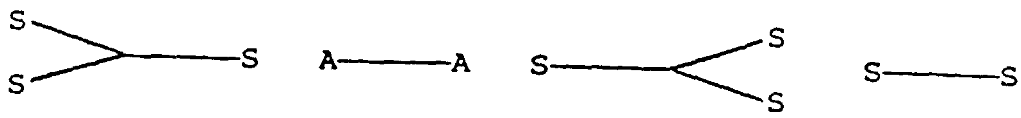

Die Prüfung der Kombinationsmöglichkeiten dieser Komponenten zeigt, daß Ketten mit zwei und einer Verzweigung(en) sowie rein lineare Ketten bei Wahl dieses Reglersystems entstehen.

3.

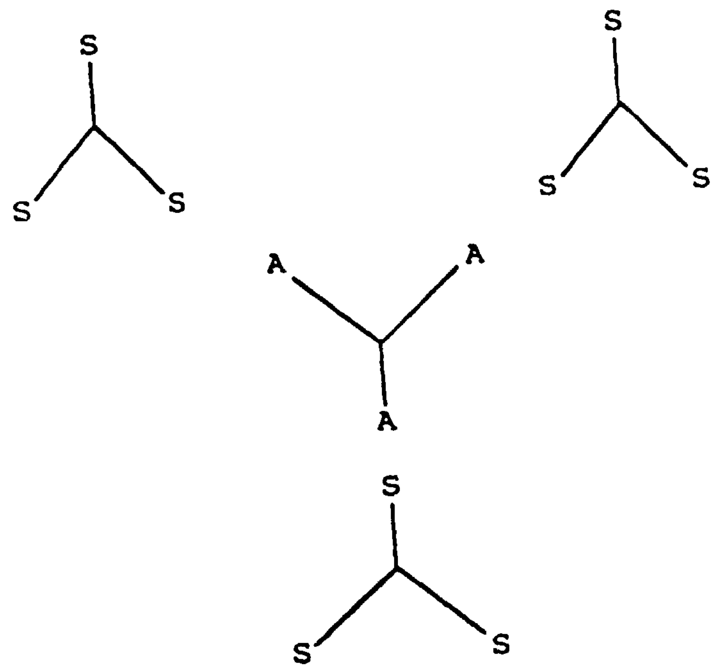

Bei Wahl dieses Reglersystems entstehen stark verzweigte Polymermoleküle mit breiter Molekulargewichtsverteilung mit einem mittleren Verzweigungsgrad von 4.

Wünscht man zusätzlich einen Anteil linearer Ketten, beispielsweise zur Erhöhung der Fließfähigkeit der Schmelze. so können Mono- und/oder Dicarbonsäuren in definiertem Molanteil mitverwendet werden. Es entstehen dann zusätzlich Polymermoleküle der Art linear. 1-fachverzweigt sowie 2- und 3-fachverzweigt in definiertem Anteil.

Die Darstellungen 1 und 3 zeigen auch klar, warum gemäß dem Stand der Technik, wo Salze als Monomere (mit)verwendet werden, beispielsweise die funktionellen Gruppen durch Salzbildung (beispielsweise der Trimesinsäure mit Diaminohexan) neutralisiert sind, stets Bildung vernetzter Anteile beobachtet wird.

Der Überschuß an Amin beziehungsweise die Anwesenheit von dessen stöchiometrischem Anteil, beispielsweise zu den Carboxylgruppen der Trimesinsäure, ist in der Lage, eine 3-dimensional vernetzte Struktur auszubilden, wie die von Beispiel 1 und 3 abgeleiteten Schemabilder 1 und 3 zeigen.

a)Darstellung 1, aber im Salzpaar als Monomersystem.

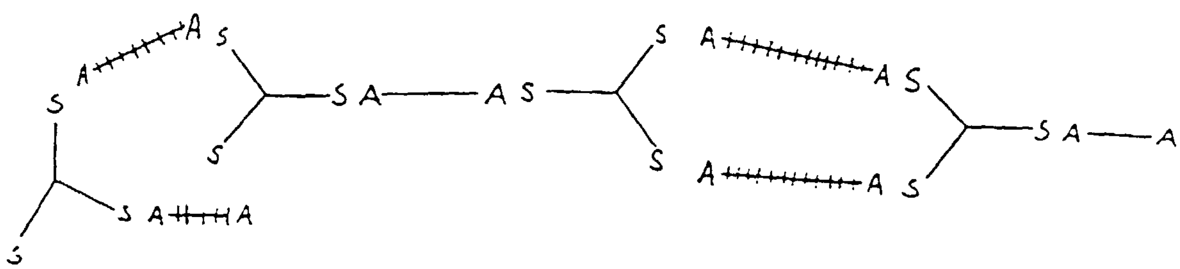

b) Darstellung 3, wo Trimesinsäure kombiniert mit Tramin in definiertem Molverhältnis eingesetzt wird, die COOH-Gruppen der Trimesinsäure aber gleichzeitig vollständig mit Diamin neutralisiert sind.

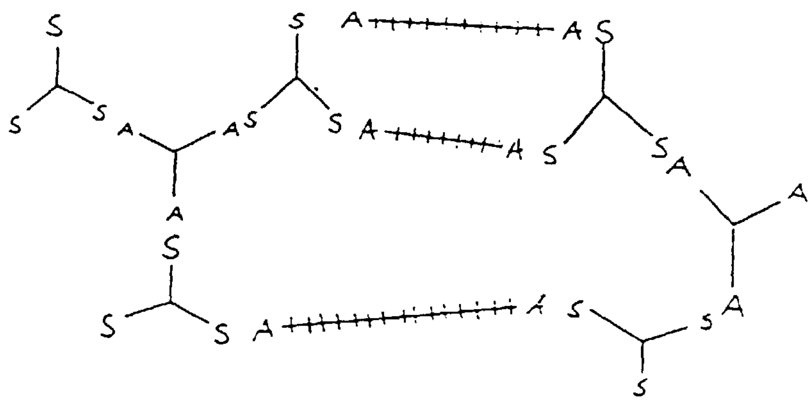

A ++++— A sind aminterminierte Polyamidketten, die mit den sauren Kettenenden unter Bildung eines 3-dimensionalen Netzwerkes kondensieren können.

Soll die erfindungsgemäß hergestellte verzweigte Polyamidmasse eine bestimmte Konzentration an funktionellen Endgruppen, beispielsweise zur gezielten Einstellung der Anfärbbarkeit mit Säurefarbstoffen, besitzen, so können monofunktionelle Verbindungen, wie Benzoesäure oder Cyclohexylamin, in der Polymerisatonsrezeptur miteingesetzt werden. Durch deren Mitverwendung kann auch eine Reduktion des Verzweigungsgrades beziehungsweise die Mitentstehung linearer Ketten in definiertem Anteil erreicht werden. Dabei spielt es eine Rolle, ob die monofunktionelle Verbindung die Endgruppen entsprechend den Komponenten a) oder b) besitzt. Die Wirkung monofunktioneller Verbindungen soll in der Darstellung 4 erläutert werden, wobei von Strukturbeispiel 1 ausgegangen wird:

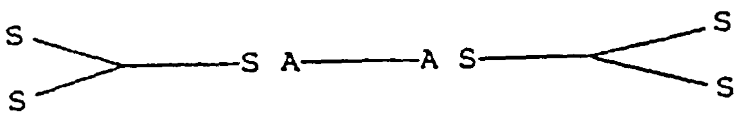 (X)

4a) Die monofunktionelle Verbindung ist eine Monocarbonsäure, -s. Schon geringe Anteile beeinflussen den strukturellen Aufbau der Polyamidkettenmoelküle, indem zusätzlich zu (X)beispielsweise folgende Strukturen mitentstehen:

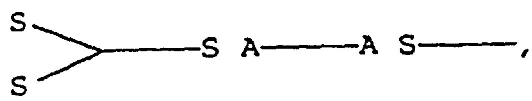,

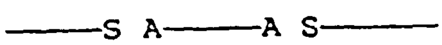,

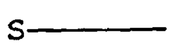

4b) Die monofunktionelle Verbindung ist ein Amin mit einer kondensationsaktiven $-NH_2$-Gruppe, beispielsweise -A.

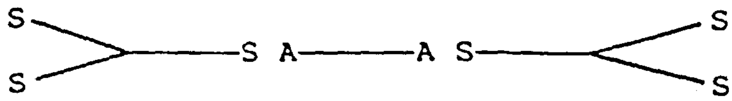

(X)

Da dieses Polymermolekül (X) säureterminiert ist, kann zunächst A mit S reagieren, ohne daß der strukturelle Aufbau wesentlich gestört wird. Es werden zunächst lediglich die funktionellen Endgruppen im gewünschten Maße beeinflußt. Werden nun aber mehr als 4 -A pro (X) verwendet, so entstehen Strukturen der folgenden Art:

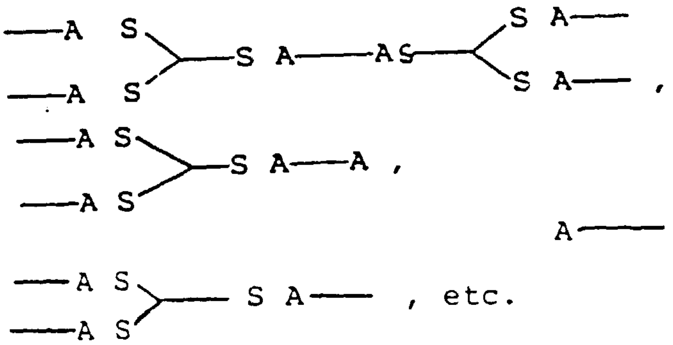

, , , etc.

Wird beispielsweise eine hohe Anfärbbarkeit mit Säurefarbstoffen in diesem System gewünscht, so sind Verbindungen mit einer kondensationsfähigen und einer sterisch abgeschirmten Aminogruppe wie

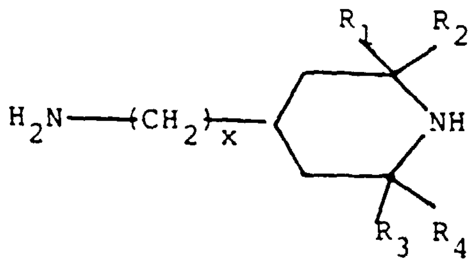

oder

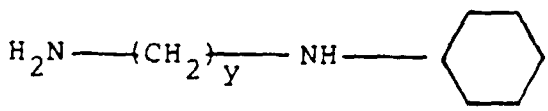

zu wählen, wobei x 0 bis 12 und y 2 bis 12 sind und $R_1$, $R_2$, $R_3$ und $R_4$ gleiche oder verschiedene Alkylgruppen mit 1 bis 4 Kohlenstoffatomen, insbesondere Methylgruppen bedeuten. Diese gelten im Rahmen dieser Erfindung als monofunktionell.

Bei der Entstehung der verzweigten Polymermoleküle gemäß vorstehnder Erfindung gelten natürlich die üblichen Gesetze des Kettenwachstums, wie sie für Kondensationspolymere bekannt sind. Insbesondere ist zu beachten:

1. Besitzt die verzweigende Komponente COOH-Gruppen. die so zueinander benachbart sind, daß bevorzugt Imidbindungen entstehen, beispielsweise ortho-Stellungen am Benzolring, so reduziert sich die Zahl der Polymerarme in dem Maße, wie Imidstrukturen gebildet werden.
2. Werden wie in der Darstellung 4b monofunktionelle Verbindungen in wesentlichem Anteil milverwendet, so ist die Endphase der Polykondensationsreaktion deutlich verzögert. Viele Kettenenden sind kondensationsinaktiv.
3. Die stark verzweigten Kettenmoleküle besitzen im Vergleich zu den linearen ein deutlich höheres Molekulargewicht, da viele vorgebildete Strukturelemente in der Endphase des Strukturaufbaus rekombinieren.
4. Da die Rekombination vorgebildeter Strukturelemente aber nie vollständig ist, verbleiben immer etwas reine

Polyaminocarbonsäure und damit einige kurze lineare Ketten.

Die überraschende Erkenntnis, daß bei völliger Abwesenheit von Salzen aus Diamin und Dicarbonsäure als Grundmonomere, jedoch bei ausschließlicher Verwendung von Aminosäure und/oder Lactam, definiert verzweigtkettige, thermoplastisch verarbeitbare Polyamide in großer Variationsbreite ihrer Eigenschaften reproduzierbar hergestellt werden können, wenn ein kombiniertes Reglersystem gemäß vorliegender Erfindung eingesetzt wird, führte zu neuartigen Polyamiden mit einem vielfäligen Spektrum von Eigenschaften. So kann beispielsweise die Fließfestigkeit durch den neuartigen Kettenaufbau erhöht werden. Werden Copoylamide aus beispielsweise 6-Lactam sowie ω-Aminoundecan- beziehungsweise ω-Aminododecansäure unter Anwendung der erfindungsgemäßen Kettenstrukturregelung hergestellt, so kann durch das Mischungsverhältnis der Grundmonomeren deren Schmelzpunkt und durch die gezielte Wahl des Reglersystems die Art und Konzentration der Endgruppen vorgegeben werden. Damit kann durch die mögliche hohe Konzentration an funktionellen Endgruppen und deren Art die Haftung auf den verschiedensten Substraten gezielt an die Praxisanforderungen angepaßt werden. Eine erhöhte Konzentration an -COOH erlaubt auch eine bessere Haftung auf Glasfasern und Mineralien, die eine Aminosilanschicht tragen.

Auch bei der Herstellung von Polymerblends ist es oft vorteilhaft, eine definiert hohe Konzentration an funktionellen Gruppen verfügbar zu haben, welche beispielsweise durch Ionenbindung. Bildung von Additionsverbindungen oder chemische Reaktion, beispiwelseise von $-NH_2$ mit NCO-, die Verträglichkeit der Polymerphasen vermitteln können. Durch geeignete Wahl der Komponente c) kann auch die Anfärbbarkeit mit sauren Farbstoffen in einem weiten Bereich gezielt variiert werden. Wird das Reglersystem so ausgewählt, daß auch kurze lineare Polymermoleküle in einem definierten Molanteil mitentstehen, so kann beispielsweise im Batchprozeß über lange Chargenfolgen polymerisiert werden, ohne daß irgendwelche Ablagerungen an der Wand des Polykondensationsgefäßes auftreten oder teilvernetze, stippige Produkte entstehen wie es bisher der Falle war.

Die erfingdungsgemaße Herstellung der Polyamide erfolgt nach den jeweils dafür bekannten Methoden, bevorzugt im Batchprozeß. Da zunächst die Komponenten entsprechend a), b) sowie gegebenenfalls c) in die wachsenden Polymerketten eingebaut werden und im Verlaufe der Entgasungsphase diese vorgebildeten Segmente sich zur endgültigen Struktur schrittweise zusammenfügen, kann die Dauer der Entgasungsphase deutlich verlängert sein. Diese kann jedoch durch Anlegen von Vakuum und ständiges Erneuern der Oberfläche sowie günstige Temperaturführung wieder verkürzt werden. Werden dem üblichen Fall entsprechend Lactame als Monomere verwendet, ist anderseits die Ringöffnungsreaktion als Folge der Anwesenheit der verzweigend wirkenden Komponenten mit ihren funktionellen Endgruppen deutlich beschleunigt. Die Wahl der verzweigend wirkenden sowie der monofunktionellen Komponenten hat sich natürlich auch am zu verwendenden Monomeren zu orientieren.

Erfordert dieses eine sehr hohe Schmelatemperatur zur Ringöffnung (Beispiel; 12-Lactam), sind bevorzugt Komponenten a), b) und c) von geringer Flüchtigkeit einzusetzen.

Als Grundmonomere kommen alle zur Polyamidherstellung geeigneten Lactame und Aminosäuren in Frage, wie beispielsweise Caprolactam, Önantlactam. Laurinlactam, Dodecalactam sowie die entsprechenden Aminosäure und Aminoundecansäure sowie ρ-(Aminomethyl)-benzoesäure

Die Komponenten a) der vorliegenden Erfindung muß mindestens 3 funktionelle Gruppen derselben Art ($-NH_2$ oder -COOH) besitzen. Sie sollte gut in der Schmelze der Monomeren löslich sein, beziehungsweise durch Salzbildung mit der Komponente b) und/oder c) in Lösung gebracht werden können. Dabei muß beachtet werden, daß bei Dicarbonsäuren mit -COOH-Gruppen in Ortho-Stellung beispielsweise am Benzolring bei der üblichen Polykondensationsreaktion Imidbildung resultiert, was die Zahl der entstehenden Kettenverzweigungen reduziert. Geeignete Komponenten a) sind: Trimesinsäure, trimerisierte Fettsäuren (aus Olsäure hergestellt) mit 50 bis 60, insbesondere 54 C-Atomen, Naphthalinpolycarbonsäuren, beispielsweise Naphthalin-1.3.5.7.-Tetracarbonsäure, die Säure oder deren Ester der Struktur

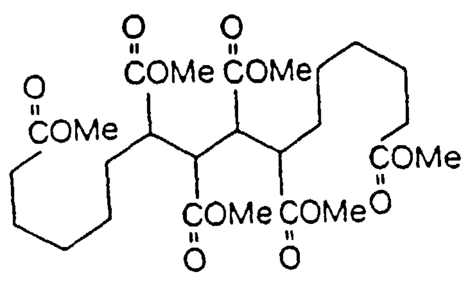

wobei Me die $-CH_3$-Gruppe bedeutet. Ganz allgemein können natürlich die üblichen Ester der Polycarbonsäuren mit kurzkettigen Alkoholen eingesetzt werden.

Amine mit 3 kondensationfähigen Gruppen $-NH_2$ sind beispielsweise

$$(H_2N\text{-}CH_2\text{-}CH_2)_3N$$

,

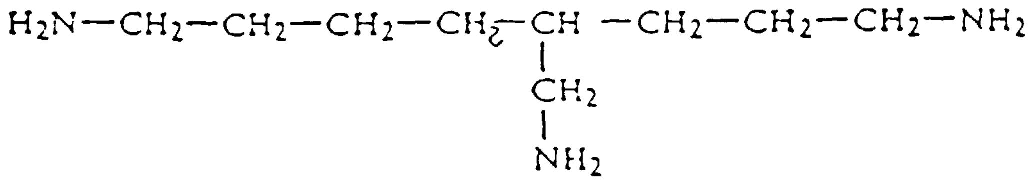

oder

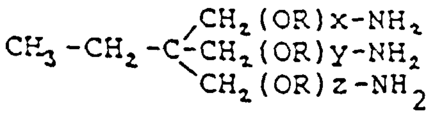

wobei x. y und z jeweils 1 bis 15 betragen und R eine Ethyl-. Butyl- oder Isopropylgruppe ist.

Als Komponenten entsprechend b) können dieselben Verbindungen wie unter a) bereits beschrieben eingesetzt werden. Daneben können bifunktionelle Verbindungen. die ausschließlich eine Art funktionelle Endgruppen besitzen, eingesetzt werden. Es sind dies Dicarbonsäuren, wie beispielsweise Adipinsäure, Azelainsäure. Sebazinsäure, Dodecandisäure, Terephthalsäure, Isopöthalsäure sowie dimerisierte Fettsäuren und Diamine wie beispielsweise Hexandiamin, Xylylendiamin, m- und ρ-Aminodicyclohexylmethan sowie entsprechende, alkylsubstituierte Produkte. Als monutunktionelle Verbindungen kommen die üblichen Monoamine und Monocarbonsäuren, wie beispielsweise Benzoesäure, Pelargonsäure, Laurinsäure, 2-Ethylhexansäure, Cyclohexylamin, Alkylamine. wie beispielsweise Tridecylamin, sowie Benzylamin in Frage. Monofunktionelle Amine im Sinne der Erfindung, die sich auf die hydrolytische Kondensationsfähigkeit der Aminogruppe bezieht, sind auch Amine, die neben einer freien Aminogruppe eine sterisch abgeschirmte Aminogruppe besitzen, wie beispielsweise die Amine.

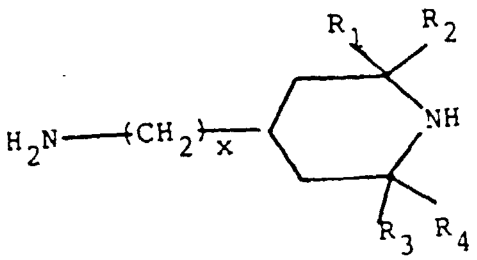

sowie

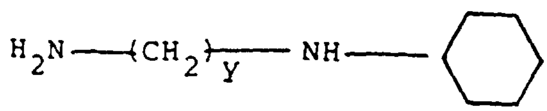

wobei x 0 bis 12, insbesondere 0 ist, und y 2 bis 12, insbesondere 3, bedeutet, und $R_1$ bis $R_4$ gleiche oder verschiedene Alkylgruppen mit 1 bis 4 Kohlenstoffatomen bedeuten.

Besonders bevorzugt ist folgendes Amin:

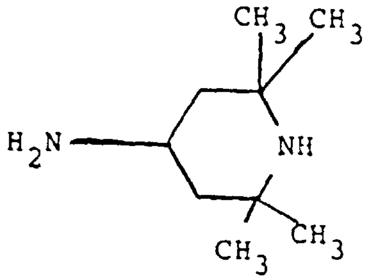

Die folgenden Beispiele erläutern die Erfindung.

Zur Durchführung dieser Beispiele werden die folgenden Grundbausteine eingesetzt;

| | |
|---|---|
| Aminolaurinsäure | ALS |
| Laurinlactam | LL |
| Aminocapronsäure | ACS |
| Caprolactam | CL |
| Aminoundecansäure | AUS |
| das Salz aus Hexamethylendiarnin und Azelainsäure | 6,9-Salz |

Folgende Komponenten a), b) und c) werden zur Steuerung des strukturellen Aufbaus verwendet:

| | |
|---|---|
| Trimesinsäure | TMS |
| Nitrilotriethanamin | N-TEA |
| Azelainsäure | AZ |
| Adipinsäure | ADS |
| Diaminohexan | HMD |
| Benzoesäure | BZ |
| 3-Amino-1-cyctohexyl-aminopropan | L-252 |
| Tridecylamin | Trida |

<u>Beispiele 1 bis 8</u>

Diese Beispiele beschreiben die Herstellung von Polyamiden im Labormaßstab.

Die Monomeren und die zusätzlichen Komponenten werden in ein Kondensationsrohr eingewogen. Die Mischung wird unter Stickstoff aufgeschmolzen und unter Rühren und stufenweiser Temperaturerhähung polykondensiert.

Diese Versuche zeigen den Einfluß der verschiedenen Monomeren und Bausteine auf das Polykondensationsverhalten sowie die erzielbaren Strukturen.

Die Ergebnisse dieser Versuche sind in der Tabelle 1 zusammengefaßt, wobei Tabelle 1a die Polymerisationsrezepturen, Tabelle 1b die Polykondensationsbedinungen und Tabelle 1c die Analyservresultate zeigt.

Die mit "V" bezeichneten Versuche sind Vergleichsversuche.

Bei der Durchführung der Versuche V1 und V2 wurde nach dem Stand der Technik das 6,9-Salz als Monomeres und das in der Polymerschmelze gut lösliche N-TEA als Komponente a) allein sowie in Kombination mit Benzoesäure eingesezt. Die Beschreibung des Reaktionsverlaufs zeigt, daß bereits nach kurzer Zeit Vernetzung eintritt.

Die Versuche V3 bis V6 betreffen einfach verzweigte Polyamide, wobei als Monomer wegen des günstigen Polykondesnationsverhaltens ein Gemisch aus ACS und ALS im Molverhältnis 1 : 1 verwendet wurde.

Beim Einsatz von Aminosäuren als Monomere tritt keine Vernetzung ein, wenn eine trifunktionelle Komponente zugefügt wird.

Das Vergleichsbeispiel 3 zeigt, daß aufgrund der geringen Löslichkeit der Trimesinsäure keine völlig klare Polymerschmelze resultiert.

Durch Kombination von Trimisinsäure (TMS) mit einem Diamin mit nur einer polykondensationsfähigen Aminfunktion, kann Salzbildung auftreten, und es resultiert eine klare Polymerschmelze. Als derartige Diamine können Benzylamin, Cyclohexylamin oder Tridecylamin verwendet werden.

Die Analysenergebnisse zeigen, daß die Konzentration dieser weiteren Komponenten das mittlere Molekulargewicht in erwarteter Weise beinflußt.

Die Beispiele Nr. 7 und 8 sind erfindungsgemäße Beispiele. Durch Kombination der trifunktionellen Komponente a), und zwar N-TEA, mit AZ als Komponente b) entstehen Polymerketten mit zwei Verzweigungsstellen. Durch Mitverwendung von Monoamin als Komponente c) entstehen lineare Polymerketten in vorgegebener Konzentration. Wie die Analysenergebnisse zeigen, resultieren trotz hohem Molekulargewicht gut fließende Produkte.

Diese Versuche zeigen, daß die gewählten reaktionsfähigen Gruppen der polyfunktionellen Komponenten a) und b) keine Nebenreaktionen im Polykondensationsablauf, wie beispielsweise Imidbildung, eingehen. Ungeeignet in diesem Sinne sind daher beispielsweise 1,2-, 1,2,4- sowie 1,2,4.5-Benzolpolycarbonsäuren, Nitrilotriessigsäure, Ethylendiamintetraessigsäure und Butan-1,2.3,4-Tetracarbonsäure. Erfindungsgemaß geeignet sind jedoch neben den bereits beschriebenen Bausteinen alle nicht oder wenig flüchtigen, thermisch genügend stabilen polyfunktionellen Carbosäuren und aliphatischen Amine, die mindestens eine funktionelle Gruppe enthalten, welche sterisch nicht abgeschirmt ist.

<u>Beispiele 9 bis 20</u>

Die folgenden Beispiele 9 bis 20 sind in technischem Maßstab durchgeführte Versuche: Zu ihrer Ausführung werden bekannte, mit Wärmeträgeröl beheizte, auf Überdruck ausgelegte Stahlauloklaven verwendet und die Polykondensation in bekannter Weise unter einer Stickstoff Wasserdampf-Atmosphäre durchgeführt.

Die Einzelheiten der Versuche sind in der Tabelle 2 zusammengefaßt. Die Tabelle 2a beschreibt die Polymerisationsrezepturen, die Tabellen 2b/c die Polymerisationsbedingungen und die analytischen Resultate und die Tabelle 2d die Resultate der mechanischen Prüfungen. Beim Vergleich der mechanischen Werte sind noch die Vergleichsversuche 19 und 20 mitaufgeführt. Vergleichsversuch 19 entspricht dabei einem Polyamid-12-Standardspritzgußmaterial und Vergleichsversuch 20 einem Polyamid-6 Standardspritzgußmaterial. Ein Vergleich der mechanischen Eigenschaften zeigt insbesondere eine Erhöhung der Streckspannung sowie eine Reduktion der Reißdehnung. Diese Änderungen im mechanischen Grundverhalten treten bei PA-12 klar zutage. Bei PA-6 sind sie, insbesondere im trockenen Zustand, ebenfalls klar zu erkennen, werden dann aber durch die Feuchtigkeitsaufnahme reduziert.

In der Tabelle 2d sind außerdem die Ergebnisse der Vergleichsversuche 19 und 20 aufgeführt. Die mechanischen Tests gemäß Vergleichsversuch 19 werden an Prüfkörpern aus Polyamid-12-Standardspritzgußmaterial und der Vergleichsversuch 20 entsprechend unter Verwendung von Polyamid-6-Standardspritzgußmaterial durchgeführt.

Um den Einfluß der Mehrfachkettenverzweigung auf das mechanische Grundverhalten klar sichtbar zu machen, werden in dem Figuren 1 bis 4 einige Kraft-Dehn-Diagramme der erfindunsgemäßen Produkte gezeigt. Gleizeitig dargestellt sind das KD-Verhalten der Standardspritzgußmaterialien aus PA-6 und PA-12. Alle KD-Diagramme entsprechen der Norm DIN 53455, gemessen bei 23°C und einer Dehnungsgeschwindigkeit von 50 mm pro Minute.

Die KD-Diagramme der erfindungsgemäßen Produkte zeigen die erhöhte Festigkeit im Bereich des Fließpunktes klar auf. Die Beispiele zeigen auch, daß sich der Verlauf der KD-Kurve mit zunehmender Verzweigungsdichte so ändert, daß der Abfall der Festigkeit nach dem "Fließpunkt" vermindert wird. Bei höheren Verzweigungsdichten und Polymerisationsgraden tritt sogar kein Abfall mehr auf (Beispiet 16), so daß auch kein definierter Fließunkt mehr vorhanden ist. Die erfindungegemäßen Produkte finden also dort ihre Anwendung, wo es um höhere Festigkeit bei geringer Dehnung geht, was in der Praxis oft der Fall ist.

Tabelle 1

a) Rezepturen

| Versuch |  | Grundbausteine |  |  | Komponenten µMol/g Polymer |  |  |  |
|---|---|---|---|---|---|---|---|---|
| Art | Nr. | 6,9-Salz | ALS/ACS= 1:1 | Menge Polymer in g | TMS | BZ | L-252 | N-TEA |
| Vergleich | 1 | + |  | 60 |  |  |  | 60 |
| " | 2 | + |  | 60 |  | 120 |  | 60 |
| " | 3 |  | + | 70 | 60 |  | - |  |
| " | 4 |  | + | 70 | 60 |  | 180 |  |
| " | 5 |  | + | 70 | 40 |  | 120 |  |
| " | 6 |  | + | 70 | 10 |  | 30 |  |
|  |  |  | AUS |  | AZ |  | Trida |  |
| Versuch | 7 |  | " | 80 | 20 |  | 20 | 60 |
| " | 8 |  | " | 80 | 30 |  | 10 | 60 |

b) Reaktionsverlauf

| Nr. | t (h) | T (°C) | t | T | t | T | t | T | Bemerkungen |
|---|---|---|---|---|---|---|---|---|---|
| 1 | 1 | 200 | 0,2 | 240 |  |  |  |  | vernetzt |
| 2 | 1 | 200 | 0,5 | 240 | 1 | 270 |  |  | " |
| 3 | 1 | 200 | 6 | 260 | - | - |  |  |  |
| 4 | 0,5 | 180 | 1 | 210 | 2 | 240 | 1 | 260 | klare Schmelze |
| 5 | 1 | 200 | 2 | 240 |  |  |  |  | " |
| 6 | 1 | 200 | 2 | 240 |  |  |  |  | " |
| 7 | 1 | 200 | 2 | 240 | 1 | 260 |  |  | " |
| 8 | 1 | 200 | 2 | 240 | 1 | 260 |  |  | " |

c) Analysenwerte

| Nr. | Lösungsviskosität η rel. 0,5 % m-Kresol | Schmelzviskosität 200/122,6 N Pa · s | Endgruppen µÄq/g - COOH | - $NH_2$ |
|---|---|---|---|---|
| 1 |  |  |  |  |
| 2 |  |  |  |  |
| 3 | 1,446 | 62 | 170 | 5 |
| 4 | 1,406 | 29 | 56 | 231 |
| 5 | 1,468 | 56 | 60 | 175 |
| 6 | 1,726 | 270 | 46 | 73 |
| 7 | 1,831 | 105 | 8 | 224 |
| 8 | 2,198 | 640 | 5 | 189 |

Tabelle 2

a) Polymerisationsrezepte

| Versuchs-Nr. | Grundbausteine | Ansatz kg | Verzweigend wirkende Komponenten mMol/kg a) TMS | b) N-TEA | b) ADS | b) HMD | c) L -252 | Mittlerer Verzweigungsgrad des verzweigten Polymeranteils. |
|---|---|---|---|---|---|---|---|---|
| 9 | ALS | 8 | 60 | | | 30 | 120 | 2 |
| 10 | ALS | 8 | 90 | 30 | | | 180 | 4 |
| 11 | ALS | 8 | 92 | 30 | | | 190 | 3,8 |
| 12 | ALS | 8 | 60 | 30 | 60 | | 170 | 3,0 |
| 13 | ALS | 40 | 56 | 28 | 46 | | 176 | 3,0 |
| 14 | CL | 40 | 70 | | | 30 | 150 | 1,75 |
| 15 | CL | 40 | 100 | 30 | | | 210 | 3,25 |
| 16 | CL | 40 | 100 | 30 | | | 210 | 3,25 |
| 17 | CL | 42 | 56 | 28 | 46 | | 176 | 3,00 |
| 18 | CL | 45 | 40 | 20 | 32 | | 124 | 3,00 |

Tabelle 2

b) Polymerisationsbedingungen — c) Polymeranalytik (Endgruppen)

| Versuch Nr. | Druckphase Temp. °C | Druckphase Zeit h | Druck atü | Entgasung Temp, °C | Entgasung Zeit, h | Lösungsviskosität η rel. (0,5% m-Kresol) | Schmelzviskosität Temp. °C | Schmelzviskosität Belastg. N | Schmelzviskosität Pa.s | Endgruppen µÄq/g - NHR | Endgruppen µÄq/g - COOH |
|---|---|---|---|---|---|---|---|---|---|---|---|
| 9 | 220 | 1 | 10 | 240 | 8 | 1,72 | 220 | 122,6 | 390 | 135 | 22 |
| 10 | 220 | 1 | 10 | 240 | 8 | 1,92 | 220 | 122,6 | 400 | 219 | 14 |
| 11 | 220 | 1 | 10 | 240 | 6 | 1,71 | - | - | - | 224 | 24 |
| 12 | 220 | 1 | 10 | 250 | 6 | 1,765 | 260 | 122,6 | 390 | 160 | 27 |
| 13 | 220 | 2 | 10 | 250 | 7 | 1,71 | - | - | - | 203 | 23 |
| 14 | 260 | 1 | 10 | 260 | 6 | 1,68 | - | - | - | 130 | 19 |
| 15 | 260 | 1 | 10 | 260 | 6 | 1,85 | - | - | - | 154 | 27 |
| *16 | 260 | 2 | 10 | 265 | 7 | 1,88 | - | - | - | 180 | 26 |
| 17 | 240 | 3 | 5 | 260 | 6 | 1,52 | - | - | - | 220 | 30 |
| 18 | 240 | 3 | 5 | 260 | 8 | 1,56 | - | - | - | 172 | 26 |

* Strukturreglersystem als wässrige Salzlösung zugefügt

Tabelle 2

d) Mechanische Eigenschaften

| Versuch Nr. | KSZ (5) trocken | KSZ (5) kondit. | STSP (1) N/mm² | STD (2) | REF (3) N/mm² | RD (4) |
|---|---|---|---|---|---|---|
| 9 | 5 | 5 | 38 | 23 | 41 | 235 |
| 10 | 4 | 4 | 49 | 33 | 47 | 30 |
| 11 | 4 | 7 | 44 | 18 | 35 | 32 |
| 12 | - | - | 50 | 15 | 44 | 32 |
| 13 | - | - | 41 | 32 | 37 | 56 |
| Vergleich 19 | 6 | 10 | 33 | 20 | 50 | 290 |
| 14 | - | - | - | - | 65 | 22 |
| | - | - | - | - | *37 | *100 |
| 15 | - | - | 36 | 10 | - | - |
| | | | *28 | *30 | *47 | *260 |
| 16 | - | - | 58 | 22 | - | - |
| | | | *32 | *30 | *32 | *55 |
| 17 | - | - | 65 | 30 | - | - |
| | | | *37 | *30 | *37 | *90 |
| 18 | 4 | oB | - | - | 46 | 52 |
| | - | - | *31 | *30 | *47 | *300 |
| Vergleich 20 | 5 | 15 | 56 | 39 | 43 | 100 |
| | - | - | *29 | *30 | *57 | *260 |

Es bedeuten:

(1) Streckspannung

(2) Streckdehnung

(3) Reißfestigkeit

(4) Reißdehnung

(1)-(2) je DIN-53455

(5) Kerbschlagzähigkeit DIN-53453 in (kJ/m²)

* Meßwerte in konditioniertem Zustand

## Patentansprüche

1. Verfahren zur Herstellung von thermoplastisch verarbeitbaren, durch hydrolytische Polymeration erhältliche Polyamide aus Aminosäuren und/oder Lactamen als Grundbausteinen, wobei mindestens 50 Gew.-% der Polymermoleküle mehr als eine Kettenverzweigung besitzen, dadurch gekennzeichnet, daß die Polyamide in der Weise erhalten werden, daß der Schmelze der Grundmonomeren verzweigend wirkende Komponenten in folgender Zusammensetzung zugesetzt werden:

a) 5 bis 150 µMol/g Polymeres eines mindestens trifunktionellen, aus einem Amin oder aus einer Carbonsäure bestehenden Monomeren, wobei die Aminogruppen primär sind, sowie
b) 2 bis 100 µMol/g Polymeres eines mindestens bifunktionellen, aus einer Carbonsäure oder einem Amin bestehenden Monomeren, mit der Maßgabe, daß dann, wenn a) ein Amin ist, b) eine Carbonsäure sein muß, sowie dann, wenn a) eine Carbonsäure ist, b) ein Amin sein muß, sowie gegebenenfalls
c) 5 bis 450 µMol/g Polymeres eines bei einer üblichen Polykondensation monofünktionell wirkenden Monomeren,
wobei ein Molverhältnis der Komponente a) zu der Komponente b) von mindestens 1 eingehalten wird, wenn die Komponente a) trifunktionell und die Komponente b) bifunktionell ist und von mindestens 2 eingehalten wird, wenn die Komponente a) und die Komponente b) trifuniktionell sind, und mit der Maßgabe, daß bei Verwendung von ε-Caprolactam als Grundmenomer, Trimesinsäure und bifunktionelle Amin, ω-Aminocapronsäure in einer Menge von 0 Gew.-% bis weniger als 3 Gew.-%, bezogen auf ε-Caprolactam, zugesetzt wird und daß die hydrolytische Polymerisation ohne getrennte Verfahrensstufe entsprechend Zusatz von 2 bis 25 Gew.-% Wasser bei 70 bis 210°C durchgeführt wird.

**2.** Verfahren gemäß Anspruch 1, dadurch gekennzeichnet, daß die Polyamidein der Weise erhalten werden daß monofunktionelle Verbindungen c) mit einer Funktionalität entsprechend der Komponenten a) in einem Molanteil, der a) nicht übersteigt, mitverwendet werden.

**3.** Verfahren gemäß Anspruch 1, dadurch gekennzeichnet, daß die Polyamide in der Weise erhalten werden, daß monofunktionelle Verbindungen c), die die gleichen Funktionalitäten wie b) haben, in einem maximalen Molanteil, der sich gemäß der folgenden Formel berechnet, eingesetzt werden

$$c) = m_{a)} f_{a)} - m_{b)} f_{b)} + 100.$$

wobei $m_{a)}$ und $m_{b)}$ die Molanteile der Verbindungen a) und b) (in µMol/g Polymeres ausgedrückt) und $f_{a)}$ sowie $f_{b)}$ die Funktionalitäten der Verbindungen bedeuten.

**4.** Verfahren gemäß den Ansprüchen 1 bis 3, dadurch gekennzeichnet, daß die Polyamide in der Weise erhalten werden daß monomere Verbindungen entsprechend a) und b) eingesetzt werden und dabei die Bedingungen gemäß der Ansprüche 2 und 3 jeweils für die entsprechenden monofunktionellen Verbindungen c) eingehalten werden.

**5.** Verfahren gemäß Anspruch 1, dadurch gekennzeichnet, daß die Polyamide in der Weise erhalten werden daß als mindestens trifunktionelle, verzweigend wirkende Carbonsäure Trimesinsäure oder trimerisierte Fettsäuren verwendet werden.

**6.** Verfahren gemäß Anspruch 5, dadurch gekennzeichnet, daß die Polyamide in der Weise erhalten werden daß die Carbonsäure in Form ihrer Ester eingesetzt wird.

**7.** Verfahren gemäß Anspruch 6, dadurch gekennzeichnet, daß die Polyamide in der Weise erhalten werden daß ein Carbonsäureester der nachstehend angegebenen Formel eingesetzt wird

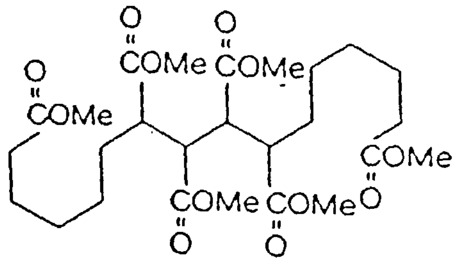

wobei Me die $CH_3$-Gruppe bedeutet.

**8.** Verfahren gemäß Anspruch 1, dadurch gekennzeichnet, daß die Polyamide in der Weise erhalten werden daß als mindestens trifunktionelles, verzweigend wirkendes Amin

$$(H_2N\text{-}CH_2\text{-}CH_2)_3N$$

verwendet wird.

**9.** Verfahren gemäß Anspruch 1, dadurch gekennzeichnet. daß die Polyamide in der Weise erhalten werden daß als mindestens trifunktionelles verzweigend wirkendes Amin

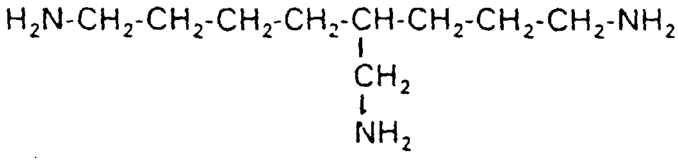

verwendet wird.

**10.** Verfahren gemäß Anspruch 1. dadurch gekennzeichnet, daß als mindestens trifunktionelles. verzweigend wirkendes Amin

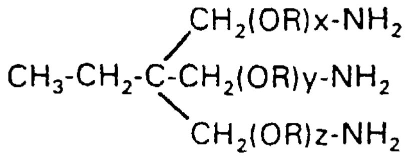

verwendet wird, wobei x, y und z jeweils 1 bis 15 sind und R eine Ethyl-, Butyl- oder Isopropylgruppe ist.

**11.** Verfahren gemäß Anspruch 1, dadurch gekennzeichnet, daß die Polyamide in der Weise erhalten werden daß als mindestens bifunktionelle Carbonsäure b) Dicarbonsäuren, insbesondere Adipinsäure, Dodekandisäure, Isophthalsäure oder Terephthalsäure, und als mindestens bifunktionelles Amin Diaminobutan, Diaminohexan, Diaminododekan oder ein cyclisches Diamin, insbesondere 1,4-Diaminocyclohexan, 4,4'-Diaminobicyclohexylmethan oder ein 1,3- oder 1,4-Xylylendiamin verwendet wird.

**12.** Verfahren gemäß Anspruch 1, dadurch gekennzeichnet, daß die Polyamide in der Weise erhalten werden daß als monofunktionell wirkendes Monomeres c) für die Kettenlängenregulierung von Polyamiden übliche Kettenreger, insbesondere Benzoesäure, Laurinsäure, Cyclohexylamin sowie Isotridecylamin, verwendet werden.

**13.** Verfahren gemäß Anspruch 1, dadurch gekennzeichnet, daß die Polyamide in der Weise erhalten werden daß als monofunktionell wirkende Monomere c) Diamine mit einer kondensationsaktiven sowie einer sterisch gehinderten Aminogruppe verwendet werden.

**14.** Verfahren gemäß Anspruch 13, dadurch gekennzeichnet, daß die Polyamide in der Weise erhalten werden daß Diamine der Formel

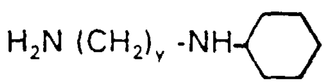

wobei y für 2 bis 12 steht und insbesondere 3 ist, verwendet werden.

**15.** Verfahren gemäß Anspruch 13, dadurch gekennzeichnet, daß die Polyamide in der Weise erhalten werden daß ein

Diamin der Formel

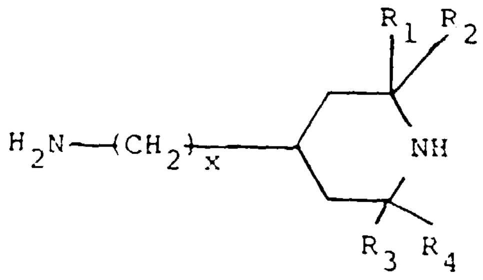

verwendet wird, wobei x eine ganze Zahl von 0 bis 12 ist und $R_1$, $R_2$, $R_3$ und $R_4$ gleiche oder verschiedene Alkylgruppen mit 1 bis 4 Kohlenstoffatomen, insbesondere Methylgruppen, bedeuten.

**16.** Verfahren gemäß Anspruch 1, dadurch gekennzeichnet, daß die Polyamide in der Weise erhältlich sind, daß als Polyamidausgangsstoffe Caprolactam, Önantlactam, Laurinlactam beziehungsweise die entsprechenden Aminocarbonsäuren sowie ω-Aminoundecansäure und 4-(Aminomethyl)-benzoesäure alleine oder in Kombination verwendet werden.

**Claims**

**1.** Process for the production of thermoplastically processable polyamides which can be obtained by hydrolytic polymerisation from amino acids and/or lactams as basic units, at least 50 % by weight of the polymer molecules having more than one chain branch, characterised in that the polyamides are obtained in such a manner that branching components are added to the melt of the basic monomer in the following composition:

a) 5 to 150 µmol/g polymer of an at least trifunctional monomer consisting of an amine or a carboxylic acid, the amino groups being primary amino groups, and
b) 2 to 100 µmol/g polymer of an at least bifunctional monomer consisting of a carboxylic acid or an amine, with the proviso that when a) is an amine, b) must be a carboxylic acid and when a) is a carboxylic acid, b) must be an amine, and optionally
c) 5 to 450 µmol/g polymer of a monomer which is monofunctional in normal polycondensation, a molar ratio of component a) to component b) of at least 1 being observed when component a) is trifunctional and component b) is bifunctional and a molar ratio of at least 2 being observed when component a) and component b) are trifunctional, and with the proviso that when using ε-caprolactam as the basic monomer, trimesic acid and bifunctional amine, ω-aminohexanoic acid is added in a quantity of 0 % by weight to less than 3 % by weight in relation to ε-caprolactam, and that the hydrolytic polymerisation is carried out without a separate step corresponding to the addition of 2 to 25 % by weight water at 70 to 210°C.

**2.** Process according to claim 1, characterised in that the polyamides are obtained in such a manner that monofunctional compounds c) with a functionality corresponding to component a) are incorporated in a molar quantity not exceeding a).

**3.** Process according to claim 1, characterised in that the polyamides are obtained in such a manner that monofunctional compounds c) having the same functionalities as b) are used in a maximum molar quantity calculated according to the following formula

$$c) = m_{a)} f_{a)} - m_{b)} f_{b)} + 100,$$

where $m_{a)}$ and $m_{b)}$ are the molar quantities of compounds a) and b) (expressed in µmol/g polymer) and $f_{a)}$ and $f_{b)}$ are the functionalities of the compounds.

**4.** Process according to claims 1 to 3, characterised in that the polyamides are obtained in such a manner that monomer compounds according to a) and b) are used, the conditions according to claims 2 and 3 being observed for the corresponding monofunctional compounds c).

**5.** Process according to claim 1, characterised in that the polyamides are obtained in such a manner that trimesic acid or trimerised fatty acids are used as the at least trifunctional branching carboxylic acid.

**6.** Process according to claim 5, characterised in that the polyamides are obtained in such a manner that the carboxylic acid is used in the form of its esters.

**7.** Process according to claim 6, characterised in that the polyamides are obtained in such a manner that a carboxylate of the formula given hereinafter is used

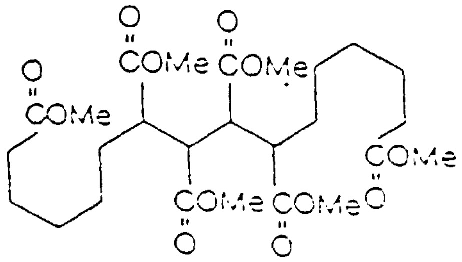

where Me is the $CH_3$-group.

**8.** Process according to claim 1, characterised in that the polyamides are obtained in such a manner that

$$(H_2N-CH_2-CH_2)_3N$$

is used as the at least trifunctional branching amine.

**9.** Process according to claim 1, characterised in that the polyamides are obtained in such a manner that

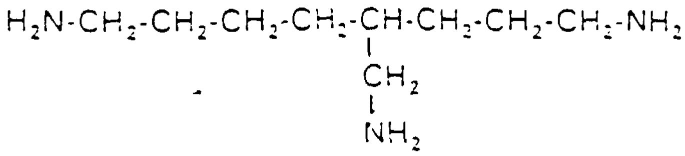

is used as the at least trifunctional branching amine.

**10.** Process according to claim 1, characterised in that

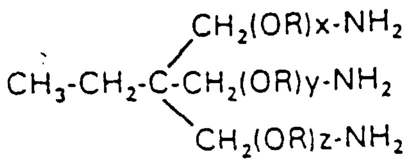

is used as the at least trifunctional branching amine, where x, y and z are each 1 to 15 and R is an ethyl, butyl or isopropyl group.

**11.** Process according to claim 1, characterised in that the polyamides are obtained in such a manner that dicarboxylic acids, in particular adipic acid, dodecanedioic acid, isophthalic acid or terephthalic acid are used as the at least bifunctional carboxylic acid and diaminobutane, diaminohexane, diaminododecane or a cyclic diamine, in particular 1,4-diaminocyclohexane, 4,4'-diaminobicyclohexylmethane or 1,3- or 1,4-xylylene diamine is used as the at least bifunctional amine.

**12.** Process according to claim 1, characterised in that the polyamides are obtained in such a manner that normal

chain regulators for regulating the chain growth of polyamides, in particular benzoic acid, lauric acid, cyclohexylamine and isotridecyl amine are used as the monofunctional monomer c).

**13.** Process according to claim 1, characterised in that the polyamides are obtained in such a manner that diamines with a condensation-active and sterically hindered amino group are used as the monofunctional monomer c).

**14.** Process according to claim 13, characterised in that the polyamides are obtained in such a manner that diamines of the formula

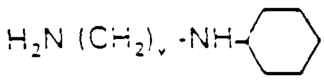

are used, where y stands for 2 to 12 and is in particular 3.

**15.** Process according to claim 13, characterised in that the polyamides are obtained in such a manner that a diamine of the formula

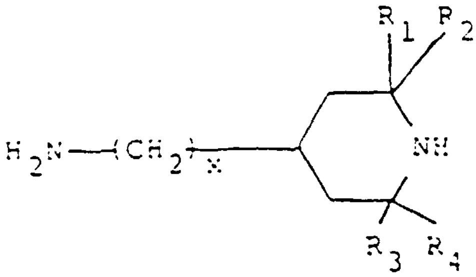

is used, where x is a whole number from 0 to 12 and $R_1$, $R_2$, $R_3$ and $R_4$ are identical or different alkyl groups with 1 to 4 carbon atoms, in particular methyl groups.

**16.** Process according to claim 1, characterised in that the polyamides can be obtained in such a manner that caprolactam, oenantlactam, laurinlactam or the corresponding amino acids and ω-aminoundecanoic acid and 4-(aminomethyl)-benzoic acid are used alone or in combination as the starting substances for the polyamides.

**Revendications**

**1.** Procédé de préparation de polyamides thermoplastiques et accessibles par polymérisation avec hydrolyse à partir d'acides aminés et/ou de lactames utilisés comme motifs de base, dont au moins 50 % des molécules polymères comportent plus d'une ramification, caractérisé en ce qu'on obtient ces polyamides en ajoutant, à la masse fondue de monomères constitutifs, des composants qui jouent le rôle d'agents ramificateurs et dont la composition est la suivante :

a) de 5 à 150 µmol, par gramme de polymère, d'un monomère au moins trifonctionnel, qui est une amine ou un acide carboxylique, les groupes amino étant primaires, ainsi que
b) de 2 à 100 µmol, par gramme de polymère, d'un monomère au moins bifonctionnel, qui est une amine ou un acide carboxylique, sous réserve que, si (a) est une amine, (b) soit un acide carboxylique et que, si (a) est un acide carboxylique, (b) soit une amine, ainsi que, éventuellement,
c) de 5 à 450 kmol, par gramme de polymère, d'un monomère qui joue le rôle d'un composé monofonctionnel dans une polycondensation habituelle,
en maintenant le rapport molaire du composant (a) au composant (b) à une valeur d'au moins 1 si le composant (a) est trifonctionnel et le composant (b) est bifonctionnel, et d'au moins 2 si les composants (a) et (b) sont trifonctionnels, et sous réserve que, si l'on emploie de l'ε-caprolactame en tant que monomère constitutif, de l'acide trimésique et une amine bifonctionnelle, on ajoute de l'acide ω-aminocaproïque en une proportion de 0 à moins de 3 % en poids par rapport à l'ε-caprolactame, et qu'on effectue la polymérisation avec hydrolyse sans étape distincte qui correspondrait à une addition de 2 à 25 % en poids d'eau, réalisée à une température

de 70 à 210 °C.

**2.** Procédé conforme à la revendication 1, caractérisé en ce qu'on obtient des polyamides en utilisant des composés monofonctionnels (c) comportant des fonctions correspondant à celles du composant (a), en une fraction molaire ne dépassant pas celle du composant (a).

**3.** Procédé conforme à la revendication 1, caractérisé en ce qu'on obtient des polyamides en utilisant des composés monofonctionnels (c) comportant les mêmes fonctions que le composant (b), en une fraction molaire maximale calculée d'après la formule suivante :

$$(c) = m_a f_a - m_b f_b + 100$$

dans laquelle $m_a$ et $m_b$ représentent les fractions molaires des composés (a) et (b), exprimées en µmol par gramme de polymère, et $f_a$ et $f_b$ représentent les nombres de fonctions présentes dans ces composés.

**4.** Procédé conforme à l'une des revendications 1 à 3, caractérisé en ce qu'on obtient des polyamides en utilisant des composés monomères correspondant aux définitions (a) et (b), les conditions indiquées dans les revendications 2 et 3 étant respectées dans chaque cas pour les composés monofonctionnels (c) correspondants.

**5.** Procédé conforme aux revendications 1 à 3, caractérisé en ce qu'on obtient des polyamides en utilisant, comme acides carboxyliques au moins trifonctionnels jouant le rôle d'agents ramificateurs, de l'acide trimésique ou des acides gras trimérisés.

**6.** Procédé conforme à la revendication 5, caractérisé en ce qu'on obtient des polyamides en utilisant les acides carboxyliques sous la forme d'esters.

**7.** Procédé conforme à la revendication 6, caractérisé en ce qu'on obtient des polyamides en utilisant un ester d'acide carboxylique correspondant à la formule donnée ci-dessous :

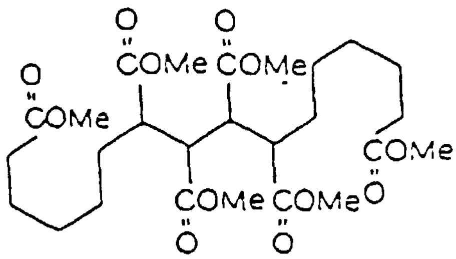

dans laquelle Me représente le groupe $-CH_3$.

**8.** Procédé conforme à la revendication 1, caractérisé en ce qu'on obtient des polyamides en utilisant, comme amine au moins trifonctionnelle jouant le rôle d'agent ramificateur, $(H_2N-CH_2-CH_2)_3N$.

**9.** Procédé conforme à la revendication 1, caractérisé en ce qu'on obtient des polyamides en utilisant, comme amine au moins trifonctionnelle jouant le rôle d'agent ramificateur,

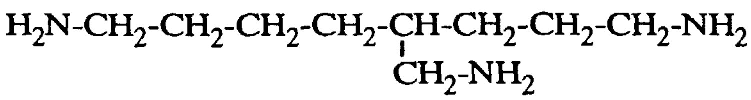

**10.** Procédé conforme à la revendication 1, caractérisé en ce qu'on utilise, comme amine au moins trifonctionnelle jouant le rôle d'agent ramificateur,

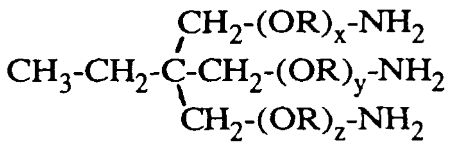

où x, y et z valent chacun de 1 à 15, et R représente un groupe éthylène, butylène ou isopropylène.

**11.** Procédé conforme à la revendication 1, caractérisé en ce qu'on obtient des polyamides en utilisant, comme acide carboxylique au moins bifonctionnel (b), des acides dicarboxyliques, en particulier de l'acide adipique, de l'acide dodécanedioïque, de l'acide isophtalique ou de l'acide téréphialique, et comme amine au moins bifonctionnelle, du diaminobutane, du diaminohexane, du diaminododécane ou une diamine cyclique, en particulier du 1,4-diaminocyclohexane, du 4,4'-diaminocyclohexylméthane, de la 1,3-xylylènediamine ou de la 1,4-xylylènediamine.

**12.** Procédé conforme à la revendication 1, caractérisé en ce qu'on obtient des polyamides en utilisant, comme monomère (c) jouant le rôle d'un composé monofonctionnel dans l'ajustement de la longueur de la chaîne du polyamide, des agents habituels de réglage de la longueur de chaîne, en particulier de l'acide benzoïque, de l'acide laurique, de la cyclohexylamine ou de l'isotridécylamine.

**13.** Procédé conforme à la revendication 1, caractérisé en ce qu'on obtient des polyamides en utilisant, comme monomère (c) jouant le rôle d'un composé monofonctionnel, une diamine comportant un groupe amino actif dans la réaction de condensation et un groupe amino stériquement encombré.

**14.** Procédé conforme à la revendication 13, caractérisé en ce qu'on obtient des polyamides en utilisant une diamine de formule

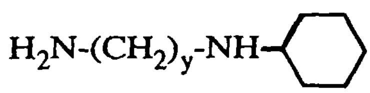

dans laquelle y vaut de 2 à 12, et en particulier 3.

**15.** Procédé conforme à la revendication 13, caractérisé en ce qu'on obtient des polyamides en utilisant une diamine de formule

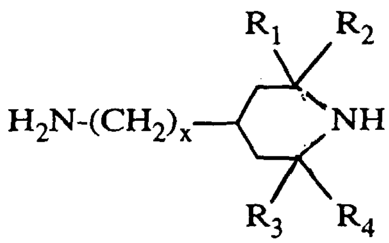

dans laquelle x représente un nombre entier valant de 0 à 12, et $R_1$, $R_2$, $R_3$ et $R_4$ représentent des groupes alkyle identiques ou différents, comportant de 1 à 4 atomes de carbone, et en particulier des groupes méthyle.

**16.** Procédé conforme à la revendication 1, caractérisé en ce qu'on obtient des polyamides en utilisant, comme matières premières de polyamide, du caprolactame, de l'oenantholactame, du laurolactame ou des acides aminocarboxyliques correspondants, ou encore de l'acide ω-amino-undécanoïque ou de l'acide 4-aminométhyl-benzoïque, seuls ou en combinaison.